# EUROPÄISCHE PATENTANMELDUNG

(11) **EP 2 182 125 A2**
(43) Veröffentlichungstag der Anmeldung: **05.05.2010**
(21) Anmeldenummer: 09013611.0
(22) Anmeldetag: 29.10.2009
(51) Int. Cl.: E04B 1/74, E04B 7/22

(54) **Verfahren zum Befestigen von Bauelementen in einem Abstand zu einem Bauteil**

(30) Priorität: 30.10.2008 DE 102008053638
(71) Anmelder: Rensburg, Markus, 58093 Hagen (DE)
(72) Erfinder: Rensburg, Markus, 58093 Hagen (DE)
(74) Vertreter: Sawodny, Michael-Wolfgang

(57) **Zusammenfassung**

Die Erfindung betrifft ein Verfahren zum Justieren eines Bauelementes in einem Abstand zu einem tragenden Bauteil.

## Beschreibung

### Technisches Gebiet

Die Erfindung betrifft Verfahren zum Befestigen von Bauelementen in einem Abstand zu einem Bauteil mit einer Vorrichtung zum Justieren des Bauelementes in einem Abstand zu dem Bauteil, insbesondere einem tragenden Bauteil.

Bevorzugt weist die Vorrichtung einen Bolzen, der ein Gewinde an seinem vorderen Ende aufweist, und einen Justierabschnitt auf.

### Stand der Technik

Aus der CH 614761 ist eine Schraube zum Befestigen von Latten, Profilschienen, Platten oder Verkleidungselementen bekannt. Bei der Befestigung von Latten aus Holz ist darauf zu achten, dass diese sowohl auf Druck (beispielsweise bei großen Schneelasten) als auch auf Zug (beispielsweise bei Sogeinwirkung) belastet werden können. Eine Schraube für einen ähnlichen Zweck zeigt die DE 298 05 784. Bei der DE 298 05 784 handelt es sich um eine Schraube ohne Drehfunktion. Des Weiteren wird in dieser Schrift lediglich die Verankerung in einem Holz betrachtet.

Während bei den aus der CH 614761 und der DE 29805784 bekannten Schrauben der Metallbolzen beide Gewinde aufnimmt, ist aus der EP 0935075 A1 eine Schraube bekannt geworden, bei der das zweite Gewinde nicht auf den Metallbolzen selbst aufgebracht ist, sondern auf einen mit dem Bolzen drehsicher verbundenen aufgesetzten Mantelteil. Bevorzugt ist dieses Mantelteil aus einem Kunststoff gefertigt.

Nachteilig an den aus diesem Stand der Technik bekannten Vorrichtungen zum Befestigen eines Bauelementes in einem Abstand zu einem Bauteil, insbesondere einem tragenden Bauteil war, dass stets zwei Gewinde vorgesehen sind. Ein weiterer Nachteil war, dass die aus der EP 0 935 075 A1 bekannten Schrauben nicht einstellbar sind.

Dies hat den Nachteil, dass zur Befestigung zunächst die Distanz beispielsweise mit Hilfe von Distanzstücken zwischen dem zu befestigenden Bauelement und dem tragenden Bauteil eingestellt werden muss, da eine nachträgliche Justage der Distanz nach Eindrehen der Schraube nicht mehr möglich war. Des Weiteren war es nicht möglich, mit den Schrauben aus der EP 0 935 075 A1 aufgrund des Kunststoffgewindes tragende Bauteile zu befestigen.

Aus der DE 37 40 460 ist eine selbstbohrende Schraube mit zwei Gewindeabschnitten zur Abstandsbefestigung von Verschalungen und dergleichen bekannt geworden, wobei eine Einstellmöglichkeit bei diesen Schrauben nicht vorgesehen ist.

Die US 2,292,577 zeigt eine Schraube mit zwei Gewindeabschnitten, wobei die beiden Gewindeabschnitte eine unterschiedliche Steigung aufweisen.

Die EP 0 267 161 zeigt eine Schraubvorrichtung, bestehend aus einem Befestigungsbolzen und einer dessen Kopf umschließenden Gewindehülse. Die äußere Stirnwand der Gewindehülse übergreift den Kopf, und ein nach innen gerichteter Rand hintergreift den Kopf. Dadurch wird die Gewindehülse axial unverschiebbar und drehbar am Befestigungsbolzen gehalten. Der Bolzen wird in einem Grundelement, beispielsweise Mauerwerk, verankert, während die Gewindehülse in einem an dem Mauerwerk zu befestigenden Bauelement eingeschraubt wird. Das Außengewinde der Gewindehülse bewirkt bei separater Verdrehung, beispielsweise mittels eines eingesteckten Werkzeuges, eine Veränderung des Abstandes zwischen dem Mauerwerk und dem zu befestigenden Bauelement. Wie aus der EP 0 267 161 hervorgeht, werden als Befestigungsbolzen handelsübliche Schrauben verwandt. Des Weiteren ist die Gewindehülse als Halbschalenteil ausgeführt, die über dem Kopf des Bolzens zusammengefügt werden. Dies ermöglicht eine Anpassung an unterschiedliche Geometrien des Schaftes des Bolzens im Kopfbereich, bedingt aber einen komplizierten Zusammenbau.

Aufgabe der Erfindung ist es, ein Verfahren zum Befestigen eines Bauelementes in einem Abstand zu einem tragenden Bauteil anzugeben, bei der dieser Abstand auf einfache Art und Weise justiert werden kann und die Nachteile des Standes der Technik vermieden werden.

Erfindungsgemäß umfasst das Verfahren zum Anbringen von Bauelementen in einem Abstand zu einem Bauteil bevorzugt zur Aufnahme von Dämmstoff umfassend folgende Schritte:
a. Vorbohren von Aufnahmelöchern im Bauteil
b. Anbringen der Bauelemente mit Hilfe einer Vorrichtung zum Justieren des Bauelementes in einem Abstand zu einem tragenden Bauteil.

Wird in einer besonderen Ausgestaltung der Erfindung ein Dämmstoff auf das Bauteil aufgebracht, so wird vorteilhafterweise in einem ersten Verfahrensschritt vor dem Vorbohren der Aufnahmelöcher in das Bauteil der Dämmstoff vorzugsweise vollflächig ohne Beschränkung hierauf auf dem Bauteil aufgebracht und nach Aufbringen des Dämmstoffes die Aufnahmelöcher in das Bauteil gebohrt. Sodann erfolgt das Anbringen der Bauelemente mit vorgegebener Distanz.

Bevorzugt wird nach Anbringen bzw. Befestigen der Bauelement, bevorzugt mit einer vorbestimmten Distanz (A) zu dem Bauteil ein weiteres Bauelement, beispielsweise eine Fassadenverkleidung an den Bauelementen befestigt bzw. aufgebracht wird. Diese Fassadenverkleidung weist dann stets denselben Abstand zum Bauteil auf. Dies ist insbesondere bei Einsatz von Dämmstoffen wichtig ohne Beschränkung hierauf.

In einem weiteren Aspekt der Erfindung wird auch eine Vorrichtung zum Befestigen eines Bauelementes in einem Abstand zu einem tragenden Bauteil angegeben.

In einer ersten Ausgestaltung ist vorgesehen, dass die Vorrichtung mit einem Bolzen mit einem Gewinde an seinem vorderen Ende versehen ist und dieser Bolzen einen Justierabschnitt aufweist, wobei der Justierabschnitt kein Gewinde aufweist, sondern einen Ring oder Kragen, der lediglich eine Justierfunktion übernimmt. Der Justierabschnitt befindet sich im allgemeinen im oberen Bereich, d.h. im Kopfbereich des Bolzens. Insbesondere wird der Bolzen in dem Bauelement, das in einem Abstand zu einem tragenden Bauteil montiert werden soll, in einer ersten Ausgestaltung der Erfindung nicht mit Hilfe eines Gewindes befestigt. Dies ermöglicht es, durch Gleiten des Justierabschnittes in einer Bohrung des Bauelementes die Distanz zwischen Bauelement und tragendem Bauteil einzustellen und insbesondere zu justieren. Ein Eingriff des Bolzens in das Bauelement erfolgt somit nicht.

Wird, um den Bolzen bzw. den Abstand zu justieren, der Bolzen in einer Bohrung gedreht bzw. zurückgedreht, so drehen sich die Ringe des Bolzens in der Bohrung ohne Kraftaufwand.

In einer fortgebildeten Ausführungsform der Erfindung ist vorgesehen, dass der Justierabschnitt durch ein auf den Bolzen aufgebrachtes Mantelteil ausgebildet wird, wobei das Mantelteil den Ring oder Kragen aufweist. Eine derartige Ausgestaltung ermöglicht es, dass der vordere und der hintere Teil der Distanzschraube einteilig aus einem Stück Material geformt werden kann. Der im Allgemeinen im Durchmesser dicker ausgebildete hintere Justierabschnitt wird dann aus einem angeformten Mantel aus einem Material gebildet, das sich kostengünstig im gewünschten Durchmesser anbringen lässt. Beispielsweise kann gemäß einer besonders bevorzugten Ausführungsform das Mantelteil aus einem Kunststoff, zum Beispiel einem faserverstärkten Kunststoff, der auf den Metallbolzen aufgespritzt wird, ausgebildet sein.

In einer weitergebildeten Ausführungsform der Erfindung ist vorgesehen, dass die Vorrichtung zum Justieren neben der zuvor beschriebenen Distanzschraube noch ein Zubehörbauteil besitzt. Das Zubehörbauteil umfasst bevorzugt an seiner Außenseite ein Gewinde und in seinem Inneren eine Bohrung, die den Justierabschnitt der Distanzschraube aufnimmt. Bei einer ersten Ausgestaltung der Erfindung kann der Justierabschnitt des Bolzens in dem Zubehörbauteil bzw. Justierhülse gleiten. Bevorzugt ist das Zubehörbauteil einstückig aus Kunststoff ausgebildet.

In einer alternativen Ausführungsform der Erfindung besteht die Vorrichtung aus einem Bolzen mit einem Gewinde an der Spitze und einem Justierabschnitt sowie einem Zubehörbauteil, insbesondere einer Justierhülse. Der Justierabschnitt weist einen Anschlag sowie einen Bund auf. Hierdurch kann zwar ein Gleiten der Justierhülse in axialer Richtung weitgehend vermieden werden, ein freies Drehen der Justierhülse um den Bolzen und damit eine Abstandsjustierung ist aber möglich. Bevorzugt ist eine derartige Vorrichtung vollständig aus Metall gefertigt und die Justierhülse einstückig ausgebildet. Um Korrosion zu vermeiden ist der Justierabschnitt mit Kunststoff überzogen oder wird in einer Kunststoffhülse geführt. Bevorzugt wird der Kunststoff mit einem Schrumpfschlauch aufgebracht. Bei dieser Ausführungsform der Erfindung wird im allgemeinen die Justierhülse vom Schraubenende her den Bolzen entlang bis zum Anschlag nach oben verschoben. Ist die Justierhülse über dem Bolzen in die richtige Position verbracht, so wird der Bolzen in einem weiteren Verfahrensschritt mit einem Bund versehen, so dass die Justierhülse nicht in Richtung der Spitze des Bolzens gleiten kann und am oberen Ende des Bolzens verliersicher gehalten wird.

Durch die zuvor beschriebene Ausgestaltung ist es möglich, die Abstände zwischen dem Bauelement und dem tragenden Bauteil noch genauer einzustellen, da das Zubehörteil über ein Gewinde verfügt. Das Zubehörteil bzw. die Justierhülse ist vollständig drehbar, so dass ein Bauelement, in das das Gewinde der Justierhülse eingreift durch Drehen der Justierhülse in seinen Abstand relativ zu dem Beuteil, d. h. dem Tragwerk eingestellt werden kann, ohne dass die Schraube bzw. der Bolzen, der in dem Tragwerk verankert ist in der Verankerung im Tragwerk bewegt werden muss. Selbstverständlich wäre das aber auch möglich und ermöglicht dann noch weiteren Einstellspielraum. Bevorzugt ist die Gewindesteigung des weiteren Gewindes am Mantelteil geringer als die Gewindesteigung an der Schraubenspitze, wodurch eine genauere Einstellbarkeit erreicht wird.

Insbesondere umfasst das Zubehörbauteil in einer speziellen Ausgestaltung einen Anschlag sowie im Inneren der Bohrung einen Vorsprung, der den Schraubenkopf des Bolzens der Distanzschraube aufnimmt.

Die Distanzschraube umfasst einen Zwischenabschnitt zwischen dem Justierabschnitt und dem Gewinde am vorderen Ende des Bolzens, d.h. am Schraubenkopf.

Der Zwischenabschnitt des Bolzens befindet sich in der Regel nach einer Montage in einem Freiraum zwischen dem Bauelement bspw. Der Verlattung und dem Tragwerk. Wird die Vorrichtung gemäß der Erfindung beispielsweise zur Befestigung einer Fassade verwendet, ist dieser Freiraum zwischen dem zu montierenden Bauelement und dem tragenden Bauwerk in der Regel korrodierenden Einflüssen unterworfen.

Bevorzugt ist daher vorgesehen, dass im Zwischenabschnitt zwischen dem Gewinde und dem Justierabschnitt ein Schutzmantel am Bolzen selbst angeordnet ist. Bevorzugt ist dieser Schutzmantel beispielsweise ein Kunststoffrohr, bspw. ein Schrumpfrohr. Ganz bevorzugt weist dieses Kunststoffrohr denselben Durchmesser auf wie die Öffnung des Zubehörbauteiles, durch das der Bolzen hindurchgeführt wird.

Während bei einer Holzkonstruktion die Distanzschraube direkt in das tragende Bauteil eingeschraubt wird, ist es auch möglich, dass das Gewinde am vorderen Ende des Bolzens in einen Dübel eingreift. Derartige Befestigungen sind insbesondere bei Mauerwerk vorteilhaft. Bei Befestigung mittels Dübel muss das Gewinde nicht als Holzschraubgewinde ausgeführt sein muss, wie im Falle einer direkten Befestigung der Distanzschraube an einem tragenden Holzwerkstoff. Wie zuvor erwähnt, sind dann andere Materialien für den Träger als Holz möglich. Bevorzugt ist der Dübel so ausgebildet, dass er einen Dübelabschnitt aufweist, einen Bund und einen Einsteckabschnitt. Der Dübelabschnitt wird vollständig in ein vor gebohrtes Loch im Mauerwerk eingebracht. Der Bund verhindert, dass der Dübel vollständig in das Loch in das Tragwerk rutscht und stellt sicher, dass der Einsteckabschnitt über das Tragwerk hinaus, beispielsweise in die Dämmung hineinragt.

Neben der Vorrichtung zum Justieren eines Bauelementes wird auch eine Fassadenbefestigung mit einer derartigen Schraube angegeben, die insbesondere dazu dient, Materialien beispielsweise auf einer Hauswand mit Hilfe einer Verlattung zu befestigen.

Eine derartige Fassadenbefestigung umfasst ein Bauteil, insbesondere ein Tragwerk, in das eine erfindungsgemäße Vorrichtung mit einem Bolzen mit Gewinde eingebracht wird. Der Bolzen bzw. die Schraube dient dazu, ein Bauelement, insbesondere eine Verlattung, mit Abstand zu dem Bauteil zu befestigen.

Bevorzugt werden, um eine höhere Steifigkeit zu erzielen, jeweils zwei Vorrichtungen zum Justieren, bevorzugt gemäß der Erfindung, paarweise und V-förmig in das Tragwerk eingebracht. Auf diese Art und Weise entsteht eine Fachwerkverschraubung. Das Prinzip der Fachwerkverschraubung besteht darin, aus mehreren relativ leicht zu biegenden, senkrecht zur Wand eingebrachten Schrauben viele biegesteife Dreiecke zu erhalten. Die biegesteifen Dreiecke weisen bei gleicher Belastung eine viel geringere Durchbiegung als die nur senkrecht zur Wand geschraubten Verlattungen auf. Bevorzugt wird auf die Verlattung ein Fassadenelement aufgebracht und zwischen Verlattung und Tragwerk eine Dämmschicht. Mit einer derartigen Verschraubung wird ein Zug- und Druckelement zur Verfügung gestellt. Die Verschraubung nimmt sowohl Wind/Sog-Belastungen, wie auch Schubbelastungen auf.

Als Tragwerk können Ziegel, Beton oder Holz dienen. Die Dämmschicht ist bevorzugt Steinwolle, Holzwolle oder ein anderer Dämmkunststoff.

Ein besonderer Vorteil der Fassadenbefestigung mittels der erfindungsgemäßen Vorrichtung ist darin zu sehen, dass insbesondere bei der flächigen Verlegung von Dämmstoffen nur noch ein punktuelles Durchstoßen der Dämmstoffe erforderlich ist. Auf diese Art und Weise wird der Aufbau von Kältebrücken weitgehend verhindert.

Des Weiteren kann der Dämmstoff auf der Außenwand vollflächig aufgebracht werden. Die Konterlattung, die gleichzeitig als Fassadenbefestigung dient wird auf den Dämmstoff aufgelegt und mit Hilfe der erfindungsgemäßen, einstellbaren Vorrichtung am Tragwerk befestigt.

Neben der Fassadenbefestigung gibt die Erfindung auch ein Verfahren für eine Fassadenbefestigung an. Bei dem erfindungsgemäßen Verfahren wird zunächst in das Tragwerk, d.h. das Bauteil, ein Loch vorgebohrt. Ist das Mauerwerk ein Beton- oder Mauerbauwerk, so kommt bevorzugt ein Dübel zum Einsatz. Im zweiten Verfahrensschritt wird die Schraube dann gegebenenfalls zusammen mit dem Dübel durch die Bohrung hindurch bis in das Mauerwerk eingeschoben. Sodann wird die Schraube ausgerichtet und eingedreht. Die Einstellung der Distanz zwischen Bauteil, bzw. Verlattung und Tragwerk kann mit Hilfe des Zubehörbauteils, das auch als Justierhülse bezeichnet wird, erfolgen. Bevorzugt ist zur Justierung im Kopf der Justierhülse ein Sechskantkopf vorgesehen.

In einer ganz bevorzugten Ausführungsform erfolgt die Verschraubung der Bauelemente, insbesondere der Holzlatten, mit Hilfe einer V-förmigen Fachwerkverschraubung. Bei dieser V-förmigen Fachwerkverschraubung werden paarweise zwei Schrauben V-förmig in das Tragwerk eingedreht. Bevorzugt ist eine der beiden Schrauben senkrecht zum Tragwerk eingedreht, die andere der beiden Schrauben unter einem Winkel von 30° bis 10°, bevorzugt 15° zur Senkrechten.

Sämtliche zuvor genannten Einzelmaßnahmen können beliebig miteinander kombiniert werden, ohne das vom Gedanken der Erfindung abgewichen wird.

Nachfolgend soll die Erfindung detailliert anhand von Ausführungsbeispielen ohne Beschränkung hierauf beschrieben werden.

### Beschreibung der Zeichnungen

Die zur Erläuterung des Ausführungsbeispiels verwendeten Zeichnungen zeigen:
- Figur 1a - 1c: eine Ausführungsform einer erfindungsgemäßen Distanzschraube;
- Figur 2: das Zubehörteil für eine Distanzschraube gemäß Figur 1a - 1c;
- Figur 3a - 3b: eine erste Ausführungsform einer Distanzschraube mit Zubehörteil, insbesondere Justierhülse;
- Figur 4a - 4c: eine zweite Ausführungsform einer Distanzschraube mit Zubehörteil, insbesondere Justierhülse; und zugehörigen Dübel.
- Figur 5: Fassadenelement umfassend einer Lattung mit Abstand zu einem Bauteil, insbesondere Tragwerk, wobei zwischen Bauelement und Bauteil ein Dämmstoff eingebracht ist;
- Figur 6a - 6b: Verschraubung gemäß dem Stand der Technik und erfindungsgemäße Fachwerkverschraubung.

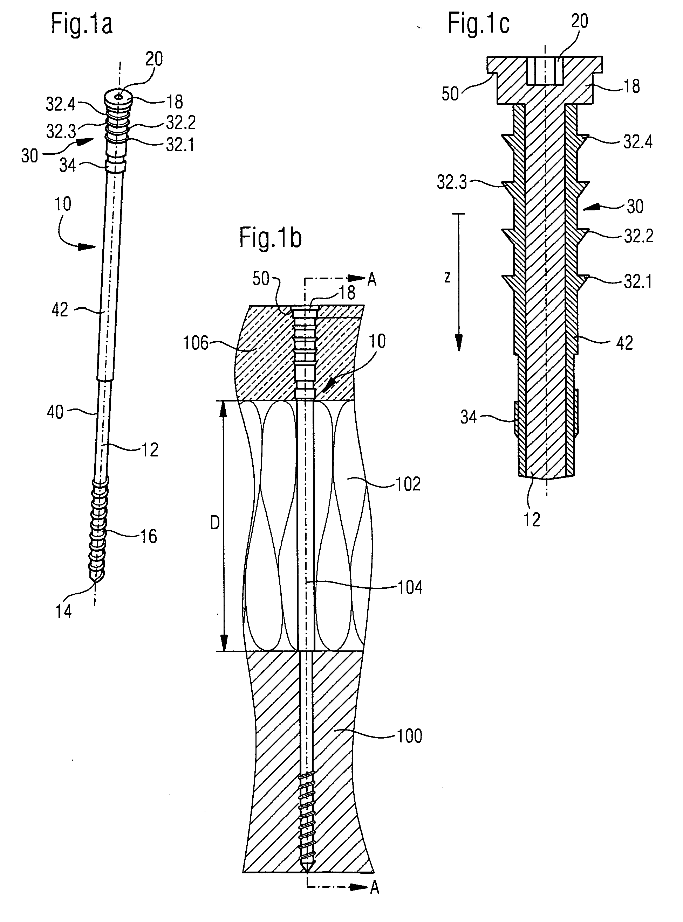

In Figur 1a ist eine dreidimensionale Ansicht einer erfindungsgemäßen Vorrichtung, insbesondere einer Distanzschraube gezeigt. Deutlich zu erkennen ist der Metallbolzen 12, der an seinem unteren Ende mit einer Bohrspitze 14 und einem Gewinde 16 versehen ist, das vorzugsweise als Holzschraubgewinde ausgeführt ist. Das Holzschraubgewinde kann direkt, das heißt ohne eine Vorbohrung in ein tragendes Bauteil eingeschraubt werden. Selbstverständlich wäre es auch möglich, bei anderen Materialien des tragenden Bauteiles das Gewinde derart auszugestalten, dass dies in einen Dübel eingeführt wird und diesen spreizt, beispielsweise bei Betonbauelementen.

Am oberen Ende des vorzugsweise aus Metall bestehenden Bolzen 12 befindet sich der Schraubenkopf 18, der mit einem Werkzeugangriff 20 ausgebildet ist, da der Kopf bei bestimmungsgemäßem Einsatz versenkt werden soll. Die Distanzschraube 10 dient der Befestigung des Bauelementes (nicht dargestellt).

Benachbart zum Schraubenkopf 20 ist der Justierabschnitt 30. Der Justierabschnitt 30 umfasst in vorliegendem Ausführungsbeispiel insgesamt vier Ringe 32.1, 32.2, 32.3, 32.4.

Wie aus Figur 1a hervorgeht, weisen die Ringen einen größeren Außendurchmesser auf, als der Metallbolzen 12, aber einen geringen, als der Schraubenkopf 18. Insbesondere bei Verwendung einer Justierhülse bzw. eines Zubehörbauteiles wird durch die Ringe eine exakte Führung in der Justierhülse ermöglicht. Unterhalb des Justierabschnittes des Bolzens ist ein Bund 34 angeordnet.

Der Abschnitt des Bolzens unterhalb des Justierabschnittes 30 und oberhalb des Abschnittes, der das Gewinde 16 trägt, wird als Zwischenabschnitt 40 bezeichnet. Der Zwischenabschnitt 40 ist in vorliegendem Ausführungsbeispiel mit einem Schutzmantel 42 gegen Korrosion geschützt, kann aber auch in einer Kunststoffhülse geführt werden.

In Figur 1b ist die Distanzschraube 10 im eingebauten Zustand dargestellt. Die Distanzschraube 10 ist in das tragende Bauteil 100, das auch als Tragwerk bezeichnet wird, beispielsweise einen Holzbalken, eingeschraubt. Oberhalb des tragenden Bauteils 100 befindet sich ein Dämmmaterial 102, durch das die Distanzschraube hindurch gesteckt wird. Innerhalb des Dämmmaterials 102 wird der Zwischenabschnitt der Distanzschraube 10 mit einem Mantelteil 104 vor Korrosion geschützt. Der Abstand D zwischen Bauelement 106 und Bauteil 100 wird im Wesentlichen durch den Anschlag 50, das heißt den Anschlag 50 des Schraubenkopfes 18, der Distanzschraube bestimmt. Dieser nimmt die Kraft, die auf das Bauelement 106 durch den komprimierten Dämmstoff 102 wirkt, auf.

Da der Justierabschnitt lediglich über Ringe verfügt, kann durch Drehen der Schraube 10 im Holz des tragenden Bauwerkes 100 der Abstand zwischen dem Bauelement 106 und dem Bauteil 100 eingestellt, das heißt justiert werden. Hierbei gleitet der Justierabschnitt in der Justierbohrung. Die Ringe verhindern, dass die Distanzschraube in der Bohrung sich verkantet.

Bei der Justierung wird daher keinerlei Kraft auf das auf eine Fassade in einer gewissen Distanz anzuordnende Bauelement 106, beispielsweise durch ein Gewinde im Bereich des Justierabschnittes, ausgeübt. Bei einer Verwendung zur Befestigung von Dämmmaterial ist es von besonderem Vorteil, wenn das Dämmmaterial nur punktweise von den Schrauben durchstoßen wird, da hierdurch Kältebrücken vermieden werden.

In Figur 1c ist nochmals detailliert der Justierabschnitt 30 der Schraube gemäß Figur 1a und b gezeigt. Gleiche Bauteile wie in den Figuren 1a und b tragen dieselben Bezugsziffern.

Deutlich zu erkennen ist der Schraubenkopf 18 mit Innenangriff 20. Des weiteren zu erkennen ist der Anschlag 50, mit dem der Schraubenkopf bei vollständigem Eindringen an der Oberkante des in einer Distanz zu einem tragenden Bauteil zu befestigenden Bauelement anliegt. Des Weiteren gut zu erkennen sind die umlaufenden Ringe 32.1, 32.2, 32.3, 32.4 des Justierabschnittes 30. Insbesondere im Fall, dass die Vorrichtung ein Zubehörteil, bevorzugt eine Justierhülse, umfasst, dienen die Ringe der Führung in der Justierhülse.

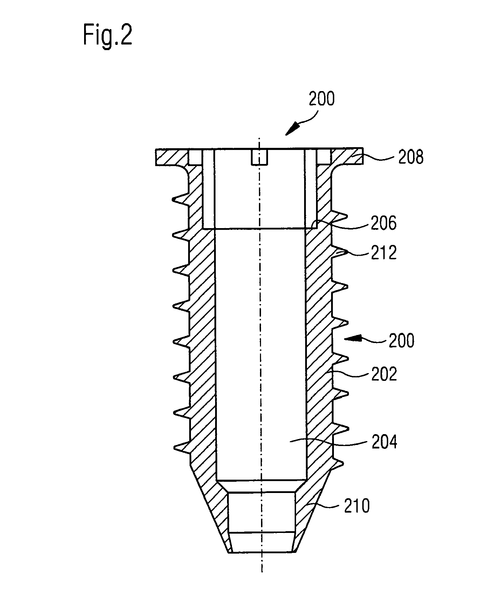

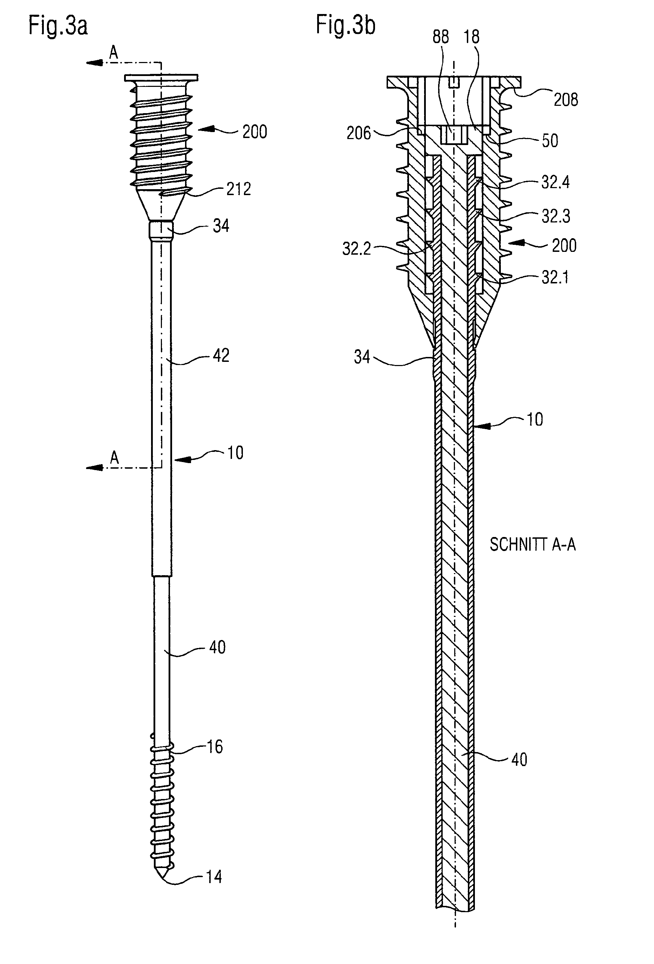

Ebenfalls zu erkennen ist der Anschlagbolzen 34. Der Anschlagbolzen 34 verhindert eine Verschiebung entlang der Bolzenachse, d.h. in z-Richtung des Zubehörbauteiles bzw. der Justierhülse, die in Fig. 2 bzw. den Figuren 3a bis 3b gezeigt ist. Wie aus Figur 1c ebenfalls hervorgeht, umfasst die Distanzschraube einen beispielsweise aus Metall bestehenden Bolzen 12, auf dem der Justierabschnitt beispielsweise in Form eines Kunststoffmaterials 42 aufgebracht wird. Das Kunststoffmaterial kann den Zwischenabschnitt 40 teilweise oder vollständig umschließen. Durch das Kunststoffmaterial wird eine Korrosion in dem Bereich, in dem die Distanzschraube, beispielsweise durch das Dämmmaterial geführt wird, weitgehend verhindert. Alternativ zu einem Kunststoffmantel, der auf den Zwischenabschnitt des Bolzens direkt aufgebracht wird, wäre es möglich, den Zwischenabschnitt auch in einem Kunststoffrohr zu führen.

Eine wesentliche feinere Einstellbarkeit als mit einer direkten Eindrehung per Distanzschraube kann dann erhalten werden, wenn ein Zubehörteil 200 verwandt wird. Das Zubehörteil 200, das auch als Justierhülse bezeichnet wird und bevorzugt in Kunststoff ausgebildet ist, ist detailliert in Figur 2 gezeigt. Das Zubehörteil ist im Wesentlichen eine Hülse 202 mit einer Innenbohrung 204, in die wie in Figur 3a und b gezeigt, die Distanzschraube eingesetzt wird. Die Innenbohrung weist einen Abschnitt 206 auf, an dem der Anschlag der in Figur 1c gezeigten Schraube 50 anliegt. Die Hülse selbst wiederum hat einen Anschlag 208, der am zu befestigenden Bauteil anliegt.

Des Weiteren weist die Hülse in der dargestellten Ausführungsform einen konisch zulaufenden Abschnitt 210 auf.

Auf die Außenseite der Hülse 202 ist ein Gewinde 212 aufgebracht. Das Gewinde 212 ist bei der Gesamtvorrichtung ein weiteres Gewinde, dessen Steigung sich von der des Gewindes an der Bohrspitze der Distanzschraube unterscheidet und im Allgemeinen geringer ist.

Ist die Distanzschraube aus Fig. 1a bis 1c in die Justierhülse eingelegt, so kann mit Hilfe der Justierhülse die Distanz zwischen Tragwerk und zu befestigendem Bauelement durch Verdrehen der Justierhülse exakt eingestellt werden.

In Figur 3a ist eine Gesamtansicht einer Distanzschraube gemäß den Figuren 1a bis 1c in Verbindung mit einem Zubehörteil bzw. einer Justierhülse gemäß Figur 2 dargestellt. Gleiche Bauteile wie in den vorangegangenen Ausführungsformen tragen dieselben Bezugsziffern. Wie man Figur 3a entnimmt, ist die Gewindesteigung des weiteren Gewindes 212 des Zubehörteils wesentlich geringer als die Steigung des Gewindes 16 an der Bohrspitze 14 der Distanzschraube 10. Dies bewirkt, dass mit ganz wenigen Drehungen des Zubehörteils 200 die innerhalb des Zubehörteils 200 frei drehbare Distanzschraube vor- und zurückgedreht werden kann, um so die Distanz zwischen Bauelement und tragendem Bauteil einstellen bzw. justieren zu können. Da die Distanzschraube in dem Zubehörteil 200 liegend, frei drehbar ausgebildet ist, wird beim Vor- und Zurückdrehen der Distanzschraube 10 keine Kraft auf das in einer Distanz zum Bauteil angeordneten Bauelement ausgeübt.

In Figur 3b ist eine Schnittansicht A - A des Zubehörteils 200 mit eingelassener Distanzschraube 10 gezeigt.

Wie aus Figur 3b deutlich zu erkennen, liegt bei eingelassener Distanzschraube 10 der Anschlag 50 des Schraubenkopfes 18 am Vorsprung 206 innerhalb der Bohrung 204 des Zubehörteils an und zieht damit den Anschlag 208 an das zu befestigende Bauteil. Der Schraubenkopf 18 weist bevorzugt ein Sechskantloch auf, in den ein Drehwerkzeug (nicht dargestellt) eingreifen kann.

Innerhalb der Bohrung 204 in der Justierhülse wird durch die Ringe 32.1, 32.2, 32.3, 32.4 die Schraube 10, insbesondere in ihrer Mittenlage, justiert, ist aber frei drehbar.

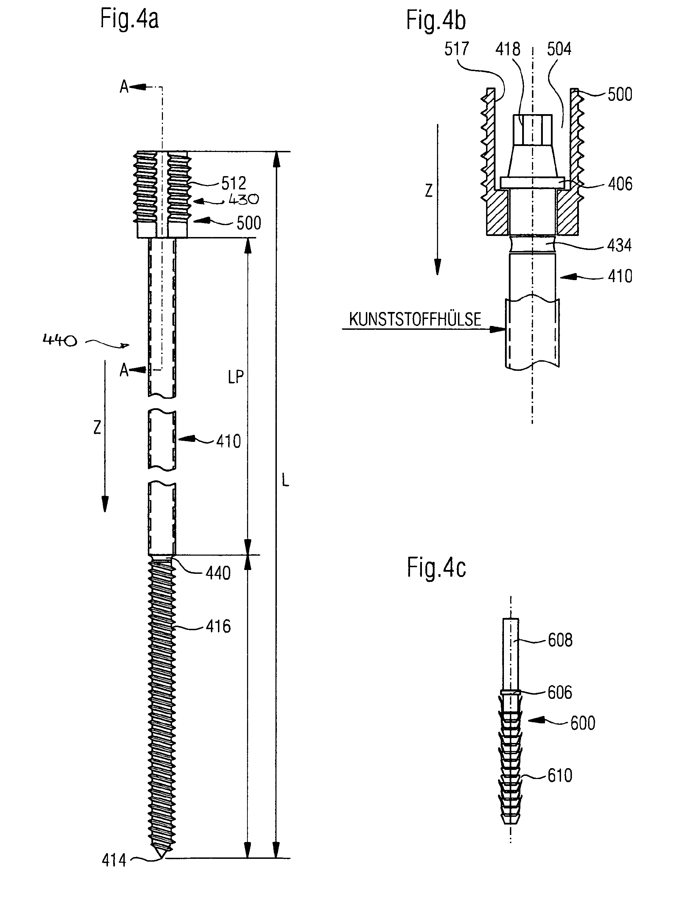

In den Figuren 4a und 4b ist eine zweite Ausführungsform einer Distanzschraube mit Zubehörteil, insbesondere Justierhülse, gezeigt.

In Figur 4a ist die Gesamtanordnung aus Schraube 410 und Justierhülse 500 dargestellt. Bei der Ausgestaltung gemäß Figur 4a sind bevorzugt sowohl die Schraube, insbesondere die Distanzschraube 410, wie auch die Justierhülse 500, aus einem metallischen Material angefertigt.

Gleiche Bauteile der Distanzschraube, wie in den Figuren 1a bis 1c, weisen in Figur 4a um eine 400 erhöhte Bezugsziffer auf. Der Justierabschnitt in Fig. 4a ist daher mit 430 bezeichnet.

Die Distanzschraube 410 umfasst wiederum im Spitzenabschnitt 414 ein Gewinde 416. Der Zwischenabschnitt 440 wird nicht durch eine aufgebrachte KunststoffUmmantelung geschützt, sondern durch eine Kunststoffhülse, durch die die Schraube hindurchgeführt wird. Die Kunststoffhülse kann auch aufgeschrumpft sein.

Die Justierhülse 500 weist wiederum ein Gewinde 512 auf. Die Distanzschraube 410 kann sich innerhalb der Justierhülse ohne Kraftaufwand bewegen, insbesondere frei drehen. Dadurch ist es möglich, mit Hilfe der Justierhülse 500 die Distanz, zwischen einem Bauteil und einem Tragwerk, in das die Spitze 416 der Schraube eingedreht ist, einzustellen. Dies geschieht dadurch, dass das Gewinde der Justierhülse in das Bauelement eingreift. Durch Drehen des Gewindes wird das Bauelement relativ zu der Vorrichtung umfassend die Justierhülse 500 und den Bolzen 410 in axialer Richtung, d. h. in z-Richtung hin- und herbewegt. Ist das Gewinde 416 des Bolzens 410 im Tragwerk verankert, so wird durch die Justierhülse der Abstand bzw. die Distanz des Bauelementes, in das das Gewinde der Justierhülse eingreift relativ zum Tragwerk eingestellt. Hierbei wird der Bolzen selbst nicht verdreht. Der justierbare Abstand, der auf diese Art eingestellt werden kann, ist maximal die Dicke des Bauelementes, in das das Gewinde eingreift. Die Länge L von Distanzschraube und Justierhülse beträgt bevorzugt zwischen 150 und 400 mm, bevorzugt zwischen 250 und 350 mm. Die Länge LP des Zwischenabschnitts liegt zwischen 100 und 300 mm, bevorzugt zwischen 100 und 200 mm.

In Figur 4a ist im Schnitt a-a die Justierhülse dargestellt. Die Justierhülse 500 umfasst eine Bohrung 504, in die der Kopf 418 der Distanzschraube 410 eingelegt ist. Nach Überschreiben der Justierhülse 500 wird in die Distanzschraube 410 ein unterer Bund 434, eingebracht, der verhindert, dass die Justierhülse 500 in axialer Richtung in Richtung des Zwischenabschnitts 440 der Justierhülse gleitet. Die Distanzschraube 410 umfasst einen Anschlag 406, der eine axiale Bewegung der Distanzschraube in der Hülse in Richtung des Kopfes verhindert. Das Gewinde der Justierhülse 500 greift in das Bauelement ein. Durch Drehen des Gewindes wird das Bauelement relativ zu der Vorrichtung umfassend die Justierhülse 500 und den Bolzen 410 in axialer Richtung, d. h. in z-Richtung hin- und herbewegt. Ist das Gewinde 416 des Bolzens 410 im Tragwerk verankert, so wird durch die Justierhülse der Abstand bzw. die Distanz des Bauelementes, in das das Gewinde der Justierhülse eingreift relativ zum Tragwerk eingestellt. Hierbei wird der Bolzen selbst nicht verdreht. Der justierbare Abstand, der auf diese Art eingestellt werden kann, ist maximal die Dicke des Baulementes, in das das Gewinde eingreift. Während bei der Ausführungsform gemäß Figur 4a bzw. 4b eine Axialbewegung in z-Richtung der Distanzschraube aus der Justierhülse 500 nicht möglich ist, ist die Justierhülse um die Distanzschraube herum frei drehbar bzw. die Distanzschraube kann sich in der Justierhülse frei drehen. Wird also mit Hilfe der Justierhülse, die bevorzugt eine Sechskantöffnung 517 zum Eingreifen eines Sechskantschraubendrehers umfasst, justiert, so wird durch die Drehbewegung des Gewindes die Justierhülse im Bauelement hin und her bewegt und dadurch die Distanz des Bauelementes zum Tragwerk eingestellt. Neben der Hülse 500 kann auch der Bolzen 410 einen Sechskantkopf 418 aufweisen. In diesen greift ebenfalls ein Schraubendreher ein. Mit dem Sechskantkopf 418 kann der Bolzen 410 im Tragwerk verschraubt werden. In Fig. 4c ist der Dübel dargestellt, bevorzugt zusammen, mit der in den Figuren 4a und 4b gezeigten Vorrichtung zum Einsatz kommt. Der Dübel gemäß Fig. 4c wird in ein vorgebohrtes Loch in das Bauteil, beispielsweise ein Tragwerk eingesetzt. Das besondere des Dübels 600 ist, dass er einen Dübelabschnitt 610 aufweist, der von dem Bauteil bzw. Tragwerk aufgenommen wird und in den das Gewinde 416 des Bolzens eingedreht wird. Daneben umfasst der Bolzen 600 einen Anschlag 606 und einen Einsteckabschnitt 608, der über das Tragwerk hinausragt und gegen hineinrutschen in das Tragwerk durch den Punkt 606 gesichert ist.

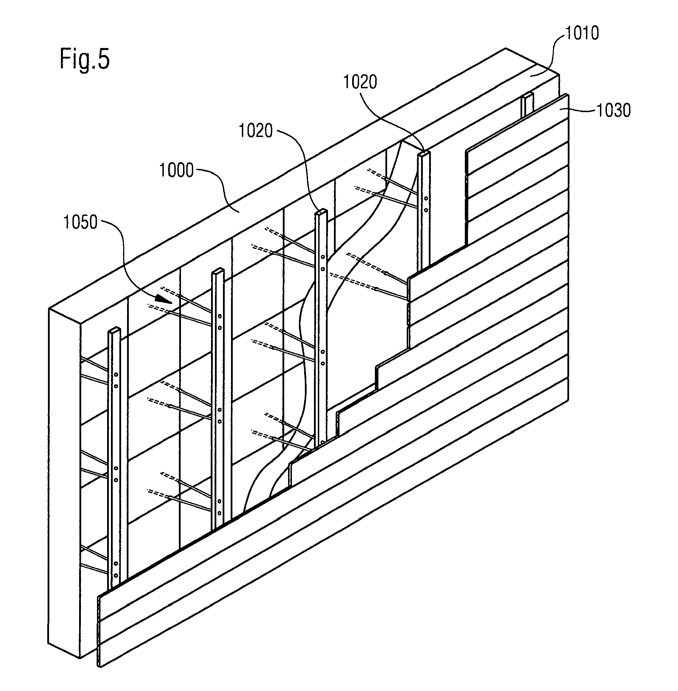

In Figur 5 ist ein mögliches Einsatzgebiet der erfindungsgemäßen Schraube, nämlich eine Fassade mit einer Lattung gezeigt. Die erfindungsgemäße Vorrichtung wird zum Anbringen eines Bauelementes, insbesondere einer Lattung, mit Abstand zu einem Bauteil, insbesondere einem Tragwerk, verwandt, wobei zwischen Tragwerk und Lattung eine bestimmte Distanz eingehalten werden soll, um beispielsweise Dämmmaterial in diese Distanz einzubringen. Die erfindungsgemäße Vorrichtung eignet sich insbesondere zum Aufbringen einer vollflächigen Dämmung auf ein Tragwerk und anschließendes Aufbringen einer Fassade. Obwohl in Figur 5 das Verfahren anhand des Aufbringens von Dämmmaterial beschrieben ist, ist dies keinesfalls einschränkend zu sehen. Anstelle des Dämmmaterials kann beispielsweise auch kein Dämmaterial verwandt werden und die Lattung mit dem erfindungsgemäßen Verfahren lediglich in einer vorgegebenen Distanz zu dem Bauelement montiert werden um beispielsweise anschließend eine Fassadenbefestigung zu ermöglichen.

Wird das Verfahren mit einem Dämmaterial durchgeführt, so kann in einem ersten Verfahrensschritt auf das Tragwerk 1000 vollflächig Isoliermaterial, beispielsweise Dämmstoffplatten 1010, fugenlos aufgebracht und auf dem Tragwerk provisorisch befestigt werden, beispielsweise mit Hilfe von Clip-Verbindungen. Obwohl der vollflächige Auftrag bevorzugt ist, ist er keineswegs einschränkend und auch nur ein teilweiser Auftrag wäre möglich.

In einem anschließenden Verfahrensschritt werden auf die Dämmschicht 1010 zum Halten derselben Latten 1020 aufgebracht und mit Hilfe der Vorrichtung zum Justieren eines Bauelementes in Abstand zu einem tragenden Bauteil umfassend Schrauben wie beispielsweise in den Figuren 1a bis 4c beschrieben an der Trägerwand unter Einhaltung einer Distanz A zwischen Latten und Tragwerk verankert.

Hierbei wird die Spitze der Schrauben in dem Tragwerk befestigt. Die Distanz kann dann mit einem Justierelement, insbesondere einer Justierhülse, eingestellt werden, so dass sich immer der gleiche Abstand der Lattung beziehungsweise Konterlattung von der Tragwand und damit die gleiche Dicke der Dämmschicht 1010 ergibt. Die Anzahl der Befestigungspunkte der Konterlatten sind nach Belastungsgewicht der vorgehängten Fassadenverkleidung zu wählen. Bevorzugt erfolgt ein Ausrichten der Latten mit einem Ausrichtgerät. Die Latten werden erfindungsgemäß in ihrer Distanz justiert. Auf die Latten 1020 wird nach Ausrichtung bzw. Jusiterung die Fassadenverkleidung 1030 aufgebracht. Die erfindungsgemäße Fassadenverkleidung gemäß Figur 5 zeichnet sich dadurch aus, dass in der Dämmung keine Holzlatten wie im Stand der Technik notwendig sind, sondern der Dämmstoff vollflächig bzw. weitgehend vollflächig bzw. fugenlos aufgebracht werden kann. Ein weiterer Vorteil ist dass die Lattung, die den Dämmstoff durch Klemmung hält für die Fassadenverkleidung genutzt werden kann. Des Weiteren werden keine Kältebrücken ausgebildet, da das Dämmmaterial nur von den Schrauben durchstoßen wird.

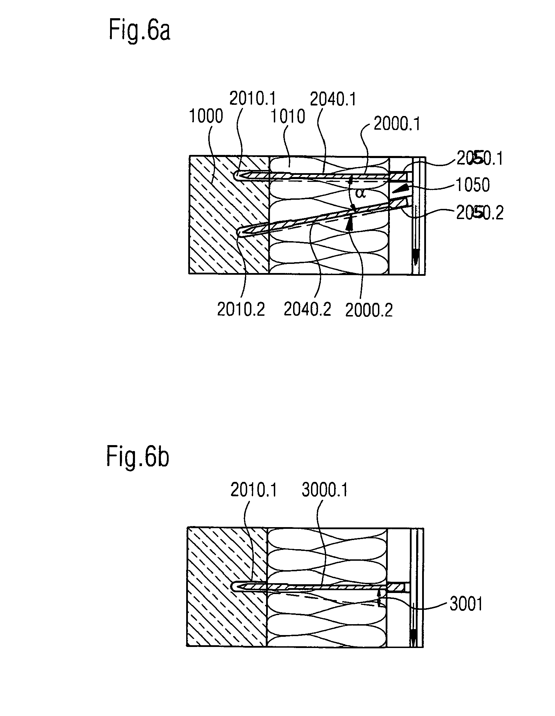

Als bevorzugte Befestigung der Latten 1020 in Figur 5 erfolgt eine Befestigung mit Hilfe einer sogenannten Fachwerkverschraubung 1050. Die Fachwerkverschraubung 1050 im Gegensatz nur zu einer senkrechten Verschraubung ist in Figuren 6a bis 6b dargestellt.
In Figur 6a ist eine Fachwerkverschraubung 1050 in einer Ebene, die senkrecht auf dem Tragwerk 1000 steht, dargestellt. Der Aufbau des in Figur 6a dargestellten Dämmsystems 1010 entspricht dem in Figur 5 beschriebenen. Wie aus Figur 6a hervorgeht, werden bei der Fachwerkverschraubung zwei erfindungsgemäße Vorrichtungen 2000.1, 2000.2 gemäß Fig. 4a-4c mit Schrauben benachbart zueinander, V-förmig in das Tragwerk 1000 eingebracht. In einer projizierten Ebene, die senkrecht auf dem Tragwerk steht, schließen die beiden V-förmigen Schrauben einen Winkel α miteinander ein, der bevorzugt zwischen 10° und 30°, insbesondere bei 15° liegt. Wie aus Figur 6a hervorgeht ist die Vorrichtung 2000.1 mit Schraube senkrecht zur Tragwand 1000 und die Vorrichtung 2000.2 mit Schraube unter einem Winkel von ungefähr 15° zur Senkrechten in das Tragwerk eingebracht Im Gegensatz zu der in Figur 6b gezeigten Verschraubung mit nur senkrecht zur Tragwand 1000 eingebrachten Vorrichtung 3000.1 mit Schraube, die sich leicht unter Wind bzw. Soglast in Richtung 3001 durchbiegt, ist ein derartiges Durchbiegen bei der Fachwerkverschraubung gem. Fig. 6a und 6b nicht oder nur erschwert möglich. Wie aus Figur 6a hervorgeht, sind die Distanzschrauben mit Hilfe von Dübeln 2010.1, 2010.2 in dem Tragwerk verankert.

Die Distanzschrauben 2000.1, 2000.2 weisen einen Mittenabschnitt 2040.1, 2040.2 auf, der bevorzugt, um eine Oxidation zu vermeiden, mit einem Kunststoffmaterial überzogen ist. Des Weiteren zu erkennen ist die Dämmschicht 1010. Des Weiteren dargestellt sind die Justierhülsen 2050.1, 2050.2. Werden die Justierhülsen verdreht, was leicht möglich ist, da sie sich frei um die innen liegenden Distanzschrauben drehen können, so wird die Lage der Lattung relativ zum Tragwerk und damit die Distanz A von Lattung und Tragwerk eingestellt.

Deutlich zu erkennen ist, dass wenigstens eine Schraube Konterlattung unter einem Winkel von 15° eingedreht sind. Die V-förmige Verschraubung in Form einer Fachwerkverschraubung, wie in Figur 6a dargestellt, hat den Vorteil, dass bei der Fachwerkverschraubung bei gleicher Belastung eine viel geringere Durchbiegung als bei nur senkrecht in die Wand eingeschraubten Schrauben auftritt.

Mit der Erfindung wird somit erstmals eine Vorrichtung zur Befestigung eines Bauelementes an einem tragenden Bauwerk in einer Distanz gezeigt, bei welcher der Abstand sehr genau justiert werden kann.

Insbesondere wird bei der Ausführungsform mit der frei drehenden Justierhülse am Ende der Schraube eine Ausrichtung des zu befestigenden Bauteils parallel zur Hauswand ermöglicht. Bei Verwendung spezieller Befestigungstechniken, wie beispielsweise einer Fachwerkverschraubung, wird zudem gegenüber herkömmlicher Verschraubungstechnik bei gleicher Belastung eine viel geringere Durchbiegung der Fassadenverkleidung erreicht.

Die Erfindung umfasst Aspekte, die in den nachfolgenden Sätzen niedergelegt werden, die Teil der Beschreibung sind, aber keine Ansprüche gemäß der Entscheidung J15/88 der Beschwerdekammer

### Sätze

1. Vorrichtung zum Justieren eines Bauelementes (1020) in einem Abstand zu einem tragenden Bauteil (1000), umfassend einen Bolzen (12)mit wenigstens einem Gewinde (16) an einem vorderen Ende des Bolzens (12) und einem Justierabschnitt (30), **dadurch gekennzeichnet, dass**
   der Justierabschnitt (30) wenigstens einen Ring (32.1, 32.2, 32.3, 32.4) und/oder Kragen aufweist, wobei der Außendurchmesser des Ringes und/oder Kragens größer ist als der Durchmesser des Justierabschnittes.
2. Vorrichtung nach Satz 1, **dadurch gekennzeichnet, dass**
   der Justierabschnitt (30)durch einen auf den Bolzen aufgebrachtes Mantelteil (42) ausgebildet wird, wobei das Mantelteil (42) den Ring und/oder den Kragen umfasst.
3. Vorrichtung nach Satz 2, **dadurch gekennzeichnet, dass**
   der Mantelteil (42) aus einem Kunststoff besteht.
4. Vorrichtung nach einem der Sätze 1 bis 3, **dadurch gekennzeichnet, dass** die Vorrichtung ein Zubehörbauteil (200) aufweist, wobei das Zubehörbauteil eine Bohrung (204) umfasst, in die der Justierabschnitt (30) einführbar ist.
5. Vorrichtung nach Satz 4, **dadurch gekennzeichnet, dass**
   das Zubehörbauteil (200) ein weiteres Gewinde (212) aufweist.
6. Vorrichtung nach einem der Sätze 4 bis 5, **dadurch gekennzeichnet, dass** das Zubehörbauteil einen Anschlag (208) aufweist.
7. Vorrichtung nach einem der Sätze 1 bis 6, **dadurch gekennzeichnet, dass** der Bolzen einen Schraubenkopf (18) aufweist.
8. Vorrichtung nach einem der Sätze 1 bis 7, **dadurch gekennzeichnet, dass** die Vorrichtung einen Zwischenabschnitt (40) zwischen dem Justierabschnitt (30) und dem Gewinde (16) am vorderen Ende des Bolzens aufweist.
9. Vorrichtung nach Satz 8, **dadurch gekennzeichnet, dass**
   der Zwischenabschnitt (40) einen Schutzmantel aufweist, dessen Außendurchmesser kleiner als der des Justierabschnittes und größer als derjenige des Gewindes am vorderen Ende des Bolzens ist.
10. Vorrichtung nach einem der Sätze 1 bis 9, **dadurch gekennzeichnet, dass** die Vorrichtung einen Dübel umfasst, in dem das Gewinde am vorderen Ende des Bolzens einführbar ist.
11. Vorrichtung zum Justieren eines Bauelementes (1020) in Abstand zu einem tragenden Bauteil (1000) umfassend einen Bolzen (410) mit wenigstens einem Gewinde (416) an einem vorderen Ende des Bolzens (410) und einem Justierabschnitt (430), **dadurch gekennzeichnet, dass** der Justierabschnitt (430) frei drehbar in einer Justierhülse (500) angeordnet ist.
12. Vorrichtung nach Satz 11, **dadurch gekennzeichnet, dass** der Bolzen (410) einen Zwischenabschnitt (440) aufweist, wobei der Zwischenabschnitt (440) von einer Kunststoffhülse umgeben ist.
13. Vorrichtung nach einem der Sätze 11 bis 12, **dadurch gekennzeichnet, dass** die Justierhülse (500) ein Außengewinde aufweist.
14. Vorrichtung nach einem der Sätze 11 bis 13, **dadurch gekennzeichnet, dass** die Justierhülse einstückig ausgebildet ist.
15. Fachwerkverschraubung zur Befestigung eines Bauelementes, insbesondere einer Konterlattung (1020) mit Distanz zu einem Bauteil, insbesondere Tragwerk (1000) umfassend wenigstens zwei Schrauben (2000.1, 2000.2) wobei wenigstens eine Schraube unter einem Winkel zur Senkrechten in das Bauteil (1000) eingebracht sind und die beiden Schrauben (2000.1, 2000.2), wenn sie in eine Ebene, die senkrecht auf dem Bauteil (1000) steht, projiziert werden, einen Winkel zwischen 10° und 30°, bevorzugt zwischen 10° und 20° einschließen.
16. Fachwerkverschraubung nach Satz 15, **dadurch gekennzeichnet, dass** die Schrauben Vorrichtungen gemäß einem der Ansprüche 1 bis 14 sind.
17. Verfahren zum Anbringen von Bauelementen (1020) in einem Abstand zu einem Bauteil (1000), bevorzugt zur Aufnahme von Dämmstoff umfassend folgende Schritte:
   - vollflächiges Aufbringen von Dämmstoff (1010) auf das Bauteil (1000)
   - Vorbohren von Aufnahmelöchern im Bauteil (1000)
   - Anbringen der Bauelemente (1020) mit Hilfe einer Vorrichtung gemäß einem der Sätze 1 bis 14
18. Verfahren nach Satz 17, **dadurch gekennzeichnet, dass** die Bauelemente mit einer Fachwerkverschraubung gemäß Satz 15 angebracht wird.
19. Verfahren gemäß Satz 17 oder 18, **dadurch gekennzeichnet, dass** das Bauelement eine Lattung ist und das Bauteil ein Tragwerk.
20. Verfahren nach einem der Sätze 17 bis 19, **dadurch gekennzeichnet, dass** die Bauelemente (1020) nach Aufbringen des Dämmstoffes (1010) mit Hilfe der Vorrichtungen gemäß einem der Sätze 1 bis 14 derart an dem Bauteil angebracht bzw. befestigt werden, dass eine vorbestimmte Distanz (A) zwischen Bauelement (1020) und Bauteil (1000) eingehalten wird.
21. Verfahren nach Satz 20, **dadurch gekennzeichnet, dass** die Distanz mit Hilfe des Justierabschnittes (30, 430) der Vorrichtung gemäß einem der Sätze 1 bis 14 bzw. einer Justierhülse (500, 2050.1, 2050.2) eingestellt wird.
22. Verfahren nach einem der Sätze 17 bis 21, **dadurch gekennzeichnet, dass** die Bauelemente (1020) mit einem Ausrichtgerät ausgerichtet werden.
23. Verfahren gemäß einem der Sätze 17 bis 22, **dadurch gekennzeichnet, dass** nach Anbringen bzw. Befestigen der Bauelement (1020), bevorzugt mit einer vorbestimmten Distanz (A) zu dem Bauteil (1000) eine Fassadenverkleidung (1030) an den Bauelementen befestigt bzw. aufgebracht wird.

## Patentansprüche

1. Verfahren zum Anbringen von Bauelementen (1020) in einem Abstand zu einem Bauteil (1000) bevorzugt zur Aufnahme von Dämmstoff umfassend folgende Schritte:
a. Vorbohren von Aufnahmelöchern im Bauteil (1000)
b. Anbringen der Bauelemente (1020) mit Hilfe einer Vorrichtung zum Justieren des Bauelementes (1020) in einem Abstand zu einem tragenden Bauteil (1000)

2. Verfahren gemäß Anspruch 1, **dadurch gekennzeichnet, dass** im Falle der Aufnahme von Dämmstoff (1010) dieser bevorzugt vollflächig auf das Bauteil vor dem Vorbohren der Aufnahmelöcher in einem ersten Verfahrensschritt aufgebracht wird.

3. Verfahren nach Anspruch 1 oder 2, **dadurch gekennzeichnet, dass** das Bauelement eine Lattung ist und das Bauteil ein Tragwerk.

4. Verfahren nach einem der Ansprüche 1 bis 3, **dadurch gekennzeichnet, dass** die Bauelemente (1020) nach Aufbringen des Dämmstoffes (1010) mit Hilfe der Vorrichtung zum Justieren eines Bauelementes (1020) in einem Abstand zu einem tragenden Bauteil (1000) derart an dem Bauteil angebracht bzw. befestigt werden, dass eine vorbestimmte Distanz (A) zwischen Bauelement (1020) und Bauteil (1000) eingehalten wird.

5. Verfahren nach Anspruch 4, **dadurch gekennzeichnet, dass** die Distanz (A) mit Hilfe eines Justierabschnittes (30, 430) bzw einer Justierhülse (500, 2040.1, 2040.2) der Vorrichtung zum Justieren eines Bauelementes (1020) in einem Abstand zu einem tragenden Bauteil (1000) eingestellt wird.

6. Verfahren gemäß einem der Ansprüche 1 bis 5, **dadurch gekennzeichnet, dass** nach Anbringen bzw. Befestigen der Bauelement (1020), bevorzugt mit einer vorbestimmten Distanz (A) zu dem Bauteil (1000) eine Fassadenverkleidung (1030) an den Bauelementen befestigt bzw. aufgebracht wird.

7. Verfahren gemäß einem der Ansprüche 1 bis 6 wobei zur Befestigung des Bauelementes (1020) mit Distanz zu einem Bauteil, insbesondere Tragwerk (1000) wenigstens zwei Schrauben (2000.1, 2000.2) verwandt werden, wobei wenigstens eine Schraube unter einem Winkel zur Senkrechten in das Bauteil (1000) eingebracht sind und die beiden Schrauben (2000.1, 2000.2), wenn sie in eine Ebene, die senkrecht auf dem Bauteil (1000) steht, projiziert werden, einen Winkel zwischen 10° und 30°, bevorzugt zwischen 10° und 20° einschließen.

8. Verfahren nach Anspruch 7, **dadurch gekennzeichnet, dass** die Schrauben (2000.1, 2000.2) Justierhülsen (2050.1, 2050.2) aufweisen mit denen eine vorbestimmte Distanz (A) des Bauelementes (1020) zu dem Bauteil (1000) eingestellt wird.

9. Verfahren nach einem der Ansprüche 1 bis 8, **dadurch gekennzeichnet, dass** die Vorrichtung zum Justieren eines Bauelementes (1020) in einem Abstand zu einem tragenden Bauteil (1000) einen Bolzen (12) mit wenigstens einem Gewinde (16) an einem vorderen Ende des Bolzens (12) und einem Justierabschnitt (30) umfasst, wobei der Justierabschnitt (30) wenigstens einen Ring (32.1, 32.2, 32.3, 32.4) und/oder Kragen aufweist, wobei der Außendurchmesser des Ringes und/oder Kragens größer ist als der Durchmesser des Justierabschnittes.

10. Verfahren nach Anspruch 9, **dadurch gekennzeichnet, dass** die Vorrichtung zum Justieren eines Bauelementes (1020) in einem Abstand zu einem tragenden Bauteil (1000) ein Zubehörbauteil (200) aufweist, wobei das Zubehörbauteil eine Bohrung (204) umfasst, in die der Justierabschnitt (30) einführbar ist.

11. Verfahren nach Anspruch 10, **dadurch gekennzeichnet, dass**
das Zubehörbauteil (200) ein weiteres Gewinde (212) aufweist.

12. Verfahren nach einem der der Ansprüche 1 bis 8, **dadurch gekennzeichnet, dass** die Vorrichtung zum Justieren eines Bauelementes (1020) in Abstand zu einem tragenden Bauteil (1000) einen Bolzen (410) mit wenigstens einem Gewinde (416) an einem vorderen Ende des Bolzens (410) und einem Justierabschnitt (430) umfasst, wobei der Justierabschnitt (430) frei drehbar in einer Justierhülse (500) angeordnet ist.

13. Verfahren nach Anspruch 12, **dadurch gekennzeichnet, dass** der Bolzen (410) einen Zwischenabschnitt (440) aufweist, wobei der Zwischenabschnitt (440) von einer Kunststoffhülse umgeben ist.

14. Verfahren nach einem der Ansprüche 12 bis 13, **dadurch gekennzeichnet, dass** die Justierhülse (500) ein Außengewinde aufweist.

15. Verfahren nach einem der Ansprüche 12 bis 14, **dadurch gekennzeichnet, dass** die Justierhülse einstückig ausgebildet ist.
